# EUROPÄISCHE PATENTANMELDUNG

(11) **EP 2 267 562 A1**
(43) Veröffentlichungstag der Anmeldung: **29.12.2010**
(21) Anmeldenummer: 09008061.5
(22) Anmeldetag: 19.06.2009
(51) Int. Cl.: G05B 19/042, G05B 19/418, G06F 17/30

(54) **Verfahren und Gerät zur Überprüfung von zwischen Komponenten auszutauschenden Daten in einem XML-Format**

(71) Anmelder: Siemens Aktiengesellschaft, 80333 München (DE)
(72) Erfinder: Lange, Ronald, 90766 Fürth (DE); Remmel, Markus, 76199 Karlsruhe (DE)

(57) **Zusammenfassung**

Die Erfindung betrifft ein Verfahren für die Überprüfung von zwischen Komponenten (AP1, AP2) einer industriellen Automatisierungsanordnung auszutauschenden Daten (D) in einem XML-Format, wobei die Daten (D) in einem ersten Schritt hinsichtlich ihrer Konformität zu syntaktischen und/oder strukturellen Regeln (x-s) überprüft werden, und wobei die Daten (D) in einem zweiten Schritt hinsichtlich Ihrer Konformität zu einem semantischen Modell (DO) überprüft werden. Die semantischen Anforderungen werden dabei strukturiert in Form einer Ontologie vorgegeben.

## Beschreibung

Die Erfindung betrifft ein Verfahren für die Überprüfung von zwischen Komponenten einer industriellen Automatisierungsanordnung auszutauschenden Daten in einem XML-Format gemäß dem Oberbegriff des Patentanspruchs 1, und ein Gerät zur Durchführung des Verfahrens.

Insbesondere im Bereich des Engineerings von automatisierungstechnischen Anlagen, also industrielle Automatisierungs-Anordnungen, ergibt sich häufig die Notwendigkeit des Datenaustauschs zwischen Automatisierungs-Komponenten bzw. Engineering-Komponenten. Eine besondere Herausforderung besteht darin, dass im "Workflow" des Engineerings Einrichtungen und "Werkzeuge" unterschiedlicher Hersteller zum Einsatz kommen können. Selbstverständlich müssen die die Daten exportierenden und die die Daten importierenden Komponenten mittels einer Konvention oder eines genormten Standards ein festgelegtes Dateiformat und ein festgelegtes Datenformat hinsichtlich Syntax und Struktur beachten, damit ein fehlerfreier Datenaustausch zwischen diesen Komponenten gewährleistet ist.

Für das die Daten übernehmende (importierende) Werkzeug oder Komponente ergibt sich dabei die Herausforderung, dass die Daten zuerst auf ihre Konsistenz (Gültigkeit) zu prüfen sind, bevor diese produktiv übernommen werden. Seitens der importierenden Komponente liegen nämlich häufig a priori keine Informationen über die Qualität der zu importierenden Daten vor, so dass eine komplette Überprüfung einer Übergabedatei o.ä. durchzuführen ist. Bei auftretenden Fehlern ist es überdies schwierig, festzustellen, ob die die Daten exportierende Komponente oder die die Daten importierende Komponente fehlerhaft gearbeitet hat. Ohne eine aufwändige Analyse der Übergabedatei ist somit eine Fehlerlokalisierung nicht durchführbar und somit oft nicht praktikabel, was ein Abstellen des Fehlers schwierig macht und überdies Fragen der Verantwortung/Haftung/Gewährleistung offen lassen kann.

Zur Lösung der Problematik der Datenübergabe zwischen oft herstellerfremden Komponenten kann im die Daten übernehmenden Werkzeug bzw. in der importierenden Komponente eine Komplettprüfung der Übergabedatei ausprogrammiert werden. Dies vermeidet den Import fehlerhafter Daten, kann jedoch immer noch keine Auskunft darüber geben, ob tatsächlich die übergebende Datei fehlerhaft erstellt wurde, oder ob der "Importfilter" der importierenden Komponente bzw. die Überprüfungs-Instanz fehlerhaft ist. Das Erstellen einer Programmroutine, die eine solche Komplettprüfung vornimmt, ist zum Einen sehr aufwändig, und zum anderen immer problemspezifisch, was bedeutet, dass ein solches Überprüfungs-Programm nur selten wiederverwendet werden kann und daher auch bei geringfügigen Änderungen der Datenstrukturen, Syntax etc. aufwändig geändert oder sogar neu programmiert werden muss.

Daher wird alternativ für die zu übergebenden Daten die XML-Technologie und zur Überprüfung dieser insbesondere eine XML-Schemaprüfung eingesetzt. Durch die XML-Schemaprüfung in dem die Daten übernehmenden (importierenden) Werkzeug bzw. Komponente reduziert sich der Programmieraufwand, da vielfach Standardkomponenten eingesetzt werden können. Allerdings lässt sich damit auch weiterhin nicht feststellen, auf welcher "Seite" der Fehler bzw. die Abweichung von einer die Daten betreffenden Konvention passierte. Weiter kann es vorkommen, dass Daten zwar hinsichtlich ihrer Syntax und ihrer Struktur einem vorgegebenen Standard bzw. einer Konvention entsprechen, aber dennoch inhaltlich Fehler aufweisen, die zu einer Funktionsstörung bei der Verwendung der Daten führen.

Zusammengefasst lässt sich sagen, dass eine "ausprogrammierte" umfassende Prüfung von zu importierenden Daten zwar eine hohe Qualität sicherstellt, aber einen dafür auch sehr hohen programmiertechnischen Aufwand erfordert, der bei einer Änderung von Syntax, Struktur o.ä. oft teilweise oder gar komplett wiederholt anfällt. Dagegen bietet die syntaktische und strukturelle Überprüfung von im XML-Format ausgetauschten Daten zwar eine Realisierung mit vergleichsweise weniger Aufwand, ist jedoch nicht in der Lage, eine umfassende Prüfung der Daten zu gewährleisten.

Es ist also eine Aufgabe der vorliegenden Erfindung, eine einfache, sichere und flexible Überprüfung von zwischen Komponenten einer industriellen Automatisierungsanordnung auszutauschenden Daten sicherzustellen.

Die Aufgabe wird durch ein Verfahren gemäß Patentanspruch 1 und durch ein Gerät gemäß Patentanspruch 6 gelöst.

Es ist ein zentraler Gedanke der vorliegenden Erfindung, dass zusätzlich zu einer Syntax- und Strukturüberprüfung von XML-Daten eine semantische Überprüfung der Daten vorgenommen wird. Zu dieser semantischen Überprüfung kann vorzugsweise auch ein sogenanntes "Katalogwissen" herangezogen werden. Dies bedeutet, dass technische Informationen zu den in den XML-Daten betroffenen Komponenten, Geräten etc. für eine inhaltliche, semantische Überprüfung der Daten herangezogen werden. Diese zusätzlichen Informationen, auch als Metadaten zu bezeichnen, werden gegebenenfalls aus externen Datenbanken abgerufen.

Die Lösung der Aufgabe sieht insbesondere ein Verfahren für die Überprüfung von zwischen Komponenten einer industriellen Automatisierungsanordnung auszutauschenden Daten in einem XML-Format vor, wobei die Daten in einem ersten Schritt hinsichtlich ihrer Konformität zu syntaktischen und/oder strukturellen Regeln überprüft werden; dabei werden die Daten in einem zweiten Schritt hinsichtlich Ihrer Konformität zu einem semantischen Modell überprüft. Durch eine solche Überprüfung können inhaltliche, logische Fehler in den Daten erkannt werden, so dass eine Anwendung fehlerhafter Daten und die damit verbundenen negativen Folgen vermieden werden können.

Die Lösung der Aufgabe sieht weiterhin den Einsatz eines Gerätes zur Überprüfung von zwischen Komponenten einer industriellen Automatisierungsanordnung auszutauschenden Daten in einem XML-Format vor, wobei das Gerät zur Durchführung eines des vorstehenden Verfahrens ausgebildet ist. Durch ein solches Gerät können die Vorteile des erfindungsgemäßen Verfahrens realisiert werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße Gerät.

Vorteilhaft wird das semantische Modell schematisch in Form einer Ontologie definiert. Der Vorteil besteht darin, dass durch eine solche Definition das semantische Modell separat gespeichert und auch veröffentlicht werden kann, so dass sowohl Anbieter als auch Bezieher von auszutauschenden Daten diese für Überprüfungszwecke verwenden können. Das semantische Wissen ist dadurch also fassbar und portabel. Außerdem können somit die für eine semantische Überprüfung notwendigen Informationen klar von den für eine syntaktische oder strukturelle Überprüfung erforderlichen Informationen abgegrenzt werden. Vorteilhaft wird dabei die Ontologie im W3C-Standard OWL dargestellt; die zugehörigen Regeln können vorteilhaft im W3C-Standard SPARQL dargestellt werden. Selbstverständlich können auch andere Standards verwendet werden.

Vorteilhaft wird die Überprüfung durch eine zwischen der die XML-Daten exportierenden und der die XML-Daten importierenden Komponente geschaltete dritte Komponente durchgeführt, was den Vorteil bietet, dass im Fehlerfall einfacher festgestellt werden kann, ob ein Fehler seitens der exportierenden oder ein Fehler seitens der importierenden Komponente vorliegt. In einer alternativen Ausführungsform können die Daten jedoch auch mittels der exportierenden oder mittels der importierenden Komponente überprüft werden, wodurch der Einsatz einer dritten Komponente entfällt.

Vorteilhaft wird zur Überprüfung der Daten weiteres Wissen und weitere Informationen herangezogen, beispielsweise sogenannte Meta-Informationen über Geräte, Einrichtungen und andere Instanzen, die mit den Daten beschrieben bzw. behandelt werden. Dieses Wissen und diese technischen oder semantischen Informationen ("Meta-Informationen") können vorteilhaft auch aus externen Datenbanken bezogen werden, wobei in diesem Fall vorteilhaft immer auf die aktuellsten zu einzelnen Geräten und Komponenten vorliegenden Informationen zurückgegriffen werden kann.

Ausführungsbeispiele des erfindungsgemäßen Verfahrens werden nachfolgend anhand der Zeichnungen erläutert. Sie dienen gleichzeitig der Erläuterung eines erfindungsgemäßen Gerätes.

Dabei zeigen:
- Figur 1: eine syntaktische und strukturelle Überprüfung von Daten gemäß dem Stand der Technik,
- Figur 2: eine erfindungsgemäße Überprüfung von Daten mit Anwendung eines semantischen Modells,
- Figur 3: eine Ontologie zur Beschreibung eines semanti- schen Modells am Beispiel eines PCs, und
- Figur 4: die Anwendung des Wissens aus der Ontologie auf ein konkretes technisches Gerät am Beispiel ei- nes PCs.

Ein gebräuchliches Ausführungsbeispiel für das erfindungsgemäße Verfahren bzw. für das erfindungsgemäße Gerät ist die Übernahme von Planungsdaten im Bereich der industriellen Automatisierungsanordnungen, wobei die Planungsdaten des Basic Engineerings (z.B. mit Hilfe der Software "Comos" des Herstellers "Comos Industry Solutions" erstellt) in ein Leitsystem-Engineering (z.B. Siemens PCS7) übertragen werden. Ein anderes Beispiel ist der Import einer PROFINET Device-Beschreibungsdatei (GSDML) in ein Engineering-Tool für die Basisautomatisierung (z.B. Siemens STEP 7). Aus Gründen der Übersichtlichkeit wird im nachfolgend beschriebenen Ausführungsbeispiel eine vereinfachte Konfiguration eines Personal-Computers betrachtet, wobei von einem Standard-Modell mit einer einzigen CPU ausgegangen wird.

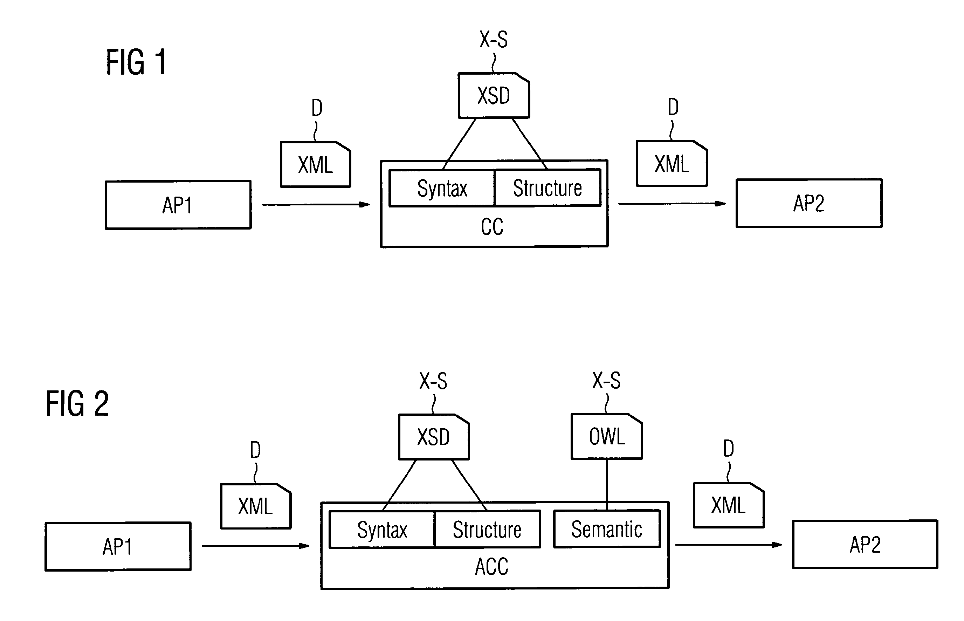

Zunächst soll eine dem Stand der Technik entsprechende Prüfung durch ein XML-Schema nachfolgend anhand der Figur 1 erläutert werden, wobei ein Gerät mit einer Komponente CC ("Consistency Checker") eingesetzt wird. Dabei hilft die Verwendung des XML-Formats bei den zu überprüfenden Daten D dabei, das Problem der syntaktischen und strukturellen (schematischen) Heterogenität zwischen einer Datenquelle, hier z.B. der Komponente AP1, und einer Datensenke, hier z.B. der Komponente AP2, zu lösen. Mit Hilfe der Daten D im XML-Format und einem zur Überprüfung eingesetzten XML-Schema X-S im sog. XSD-Dateiformat kann jedoch nicht die Semantik von Daten beschrieben werden. Die Folge davon ist, dass die Daten D zwar schemakonform zum Schema X-S sein können, aber trotzdem nicht inhaltlich korrekt sind. Das hier exemplarisch betrachtete Schema X-S definiert folgende XML-Elemente:

### <Device>

### <Module>

### <SubModule>

D.h. ein XML-Dokument mit Daten D, welches konform zu diesem Schema sein soll, darf nur diese drei Arten von XML-Elementen enthalten. Weiter definiert das Schema, dass diese Elemente nur in einer bestimmten Hierarchie vorkommen dürfen, dabei steht <Device> immer auf oberster Ebene, <Module> befindet sich eine Ebene darunter, und danach kommt das Element <Sub-Module>. Damit sind Aussagen zur Struktur getroffen.

Mit Hilfe dieser Definition können beliebige XML-Dokumente auf Konformität zu diesem Schema getestet werden. Geprüft werden sollen nun die nachfolgend gezeigten Daten D als Beispiel, welches den Aufbau eines einfachen Personal-Computers beschreibt:

```
 <Device Name="Standard-PC" Typ="PC">
     <Module Name="ASUS" Typ="Motherboard">
          <SubModule Name="Intel Pentium" Typ="CPU"/>
          <SubModule Name="Infineon" Typ="RAM"/>
          <SubModule Name="AMD Athlon" Typ="CPU/>
          <SubModule Name="Intel Celeron" Typ="CPU/>
     </Module>
 </Device>
```

Die Daten D sollen dabei von einer ersten Komponente AP1 stammend in einer zweiten Komponente AP2 ("Applikation 2") importiert werden. Dazu wird geprüft, ob die XML-Datei mit den Daten D "schemakonform" zu dem oben definierten Schema X-S ist, d.h. ob diese gemäß des definierten Schemas X-S erstellt wurde. Diese Prüfung bezieht sich auf syntaktische und strukturelle Zusammenhänge.

In der Figur 2 ist dargestellt, wie die Konsistenz der Daten D durch ein erweitertes Überprüfungsmodul ACC ("Advanced Consistency Checker") mittels eines semantischen Modells DO ("domain ontology") auch auf inhaltlicher Ebene überprüft wird. Mit Hilfe dieses semantischen Modells DO lässt sich das "Domänenwissen", welches semantische Regeln und Restriktionen enthält, formal auswertbar beschreiben. Im vorliegenden Fall geschieht die Beschreibung mittels einer Datei im OWL-Format. Damit ist es möglich, die zu überprüfenden Daten D, die im XML-Format vorliegen, in einen größeren Kontext zu stellen und somit umfassend hinsichtlich ihrer Konsistenz zu überprüfen.

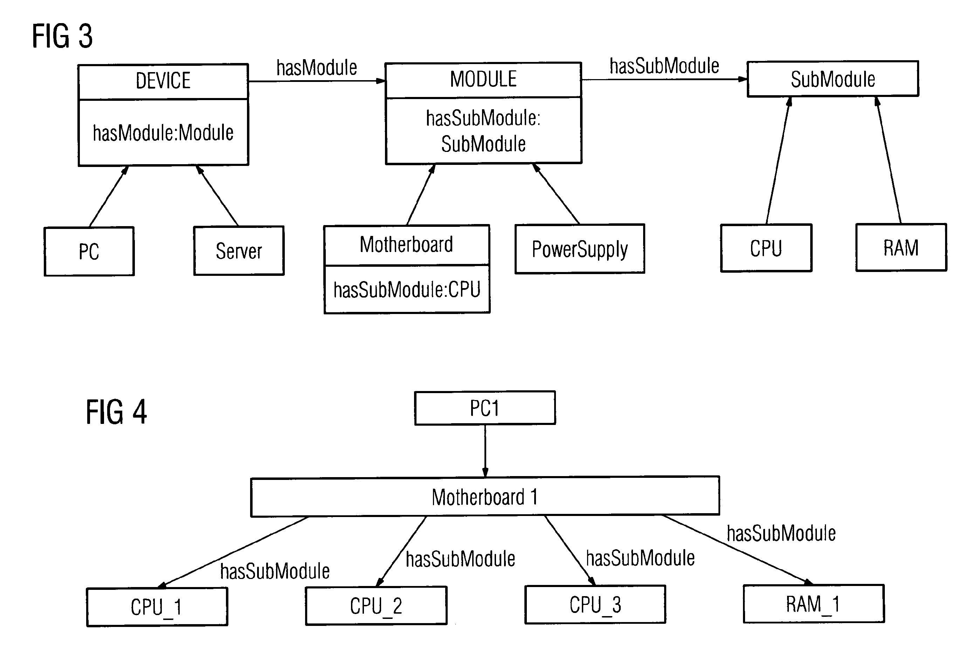

In der Figur 3 ist für das erwähnte Ausführungsbeispiel eines PCs eine Ontologie dargestellt, die das benötigte "Domänenwissen" enthält. Darin ist gemäß der Anforderung, dass ein hier betrachteter PC eine CPU haben soll, beschrieben, dass die Klasse "Motherboard" mit einem Sub-Modul "CPU" ausgestattet sein soll. Neben der Ontologie können weitere Regeln (semantische Zusammenhänge) definiert sein und in die Prüfung eingehen, beispielsweise in Form einer sog. SPARQL-Datei; dies ist jedoch hier nicht dargestellt.

In der Figur 4 ist gezeigt, wie die ursprünglichen XML-Daten D durch das Überprüfungsmodul ACC als Instanzen des ontologischen Modells generiert und dargestellt sind. Mit Hilfe des Wissens aus dem semantischen Modell DO der Figur 3 kann dabei direkt gefolgert werden, dass der im vorliegenden Ausführungsbeispiel betrachtete PC den strukturellen Angaben der Ontologie entspricht. So sind beispielsweise die CPU's dem Sub-Modul Motherboard zugeordnet und nicht etwa dem Modul PC selbst, der ja in der Praxis ohne Motherboard auch keinen entsprechenden CPU-Sockel hätte.

Die Daten D im XML-Format sind also offensichtlich schemakonform, d.h., es werden die richtigen Elemente in der richtigen Struktur gebraucht.

Trotzdem ergeben diese Daten D für einen in einem weiteren Ausführungsbeispiel betrachteten Standard-PC keinen Sinn, weil ein Standard-PC im Rahmen des vorliegenden Ausführungsbeispiels genau eine einzige CPU umfasst. Um diesen Fehler zu erkennen, bedarf es dieses bestimmen Hintergrundwissens über die Domäne "Computer". Dieses Domänenwissen kann innerhalb eines XML-Schemas, dem Schema X-S, in einfachen Fällen ausgedrückt werden; insbesondere "dynamische" Regeln, bei denen Grenzwerte o.ä. von sich ändernden Faktoren abhängen, sind hierbei oft nur schwer darstellbar. Dazu müssten vielmehr die semantischen Zusammenhänge und Restriktionen (das Domänenwissen) ausprogrammiert werden, um damit die inhaltliche Konsistenz der Daten prüfen zu können. Für das oben genannte Beispiel wäre dazu in der Komponente CC eine manuell "auszuprogrammierende" Regel zu hinterlegen, welche verhindert, dass im Gegensatz zum ebenfalls konfigurierbaren "Server" unter einem Standard-PC mehr als eine CPU angelegt wird - bzw. bei Nichterfüllen dieser Regel eine Fehlermeldung ausgibt. Zur semantischen Überprüfung mittels der Komponente ACC ist eine "dynamische" Regel denkbar, die bei Vorliegen einer speziellen Ausführungsform des Device, nämlich den bereits erwähnten (Standard-) PC, die Anzahl der CPU's auf "1" festlegt, beispielsweise in der Form:
WHEN Device IS PC
THEN Motherboard hasSubModule CPU [1]

Dadurch ist gemäß der Anforderung, dass ein hier betrachteter PC genau eine CPU haben soll, beschrieben, dass die Klasse "Motherboard" einen Werteumfang ("Kardinalität") von "1" haben muss, während zu einem Device "Server" mit dieser Regel keine Einschränkung definiert wird. Eine solche Regel lässt sich beispielsweise mittels des W3C-Standards SPARQL darstellen.

In einer vorteilhaften Variante der Erfindung kann das XML-Schema XS, welches zur syntaktischen und strukturellen Überprüfung der Daten D im XML-Format eingesetzt wird, ebenfalls durch in eine Ontologie zur syntaktischen/strukturellen Prüfung umgesetzt bzw. in die zur semantischen Prüfung verwendete Ontologie DO integriert werden, so dass in einem einzigen Schritt neben der Konformität zu dem semantischen Modell DO gleichfalls die Struktur und die Syntax beschrieben und geprüft werden können.

Durch die in der Erfindung beschriebene explizite Modellierung der semantischen Zusammenhänge, Restriktionen und Regeln müssen diese nicht aufwändig ausprogrammiert werden. Dadurch erhöht sich die Wiederverwendbarkeit von Programmcode und Daten des semantischen Modells DO, so dass sich die oft komplexen Zusammenhänge bei Änderungen leicht anpassen lassen. Außerdem ist damit eine Dokumentation des semantischen Wissens sichergestellt, weil dieses nicht in einer komplexen Programmierung eingearbeitet ist, sondern separiert in Form einer Datei speicherbar ist. Durch eine solche separate Verfügbarkeit des semantischen Modells DO kann dieses wahlweise in einer "Stand-alone"-Komponente zur Überprüfung oder aber auch in der die Daten exportierenden oder in der die Daten importierenden Komponente verwendet werden.

## Patentansprüche

1. Verfahren für die Überprüfung von zwischen Komponenten (AP1, AP2) einer industriellen Automatisierungsanordnung auszutauschenden Daten (D) in einem XML-Format,
wobei die Daten (D) in einem ersten Schritt hinsichtlich ihrer Konformität zu syntaktischen und/oder strukturellen Regeln (x-s) überprüft werden,
**dadurch gekennzeichnet,**
**dass** die Daten (D) in einem zweiten Schritt hinsichtlich Ihrer Konformität zu einem semantischen Modell (DO) überprüft werden.

2. Verfahren nach Patentanspruch 1,
**dadurch gekennzeichnet,**
**dass** das semantische Modell (DO) in Form einer Ontologie definiert wird.

3. Verfahren nach einem der vorhergehenden Patentansprüche,
**dadurch gekennzeichnet,**
**dass** die Überprüfung durch eine zwischen einer die XML-Daten erzeugenden und einer die XML-Daten importierenden Komponente geschalteten Instanz durchgeführt wird.

4. Verfahren nach einem der Patentansprüche 1 oder 2,
**dadurch gekennzeichnet,**
**dass** die Überprüfung durch die die Daten (D) importierende Komponente (AP1, AP2) durchgeführt wird.

5. Verfahren nach einem der vorhergehenden Patentansprüche,
**dadurch gekennzeichnet,**
**dass** zur Überprüfung der Konformität zu dem semantischen Modell technische Informationen zu zumindest einer von den Daten (D) betroffenen Einrichtung aus einer Datenbank abgerufen und berücksichtigt werden.

6. Gerät zur Überprüfung von zwischen Komponenten (AP1, AP2) einer industriellen Automatisierungsanordnung auszutauschenden Daten in einem XML-Format,
**dadurch gekennzeichnet,**
**dass** das Gerät zur Durchführung eines der vorstehenden Verfahren ausgebildet ist.
